# FASCICULE DE BREVET EUROPEEN

(11) **EP 0 810 323 B1**
(45) Date de publication et mention de la délivrance du brevet: **29.10.2003**
(21) Numéro de dépôt: 97401113.2
(22) Date de dépôt: 21.05.1997
(51) Int. Cl.: D21H 21/16, C09J 151/00

(54) **Collage du papier au moyen de dispersions-latex de copolymères monomeres hydrophobes/polymères de type styrène-anhydride maléique à faible masse moléculaire**
Leimung von Papier mit Latexdispersionen aus Copolymeren aus hydrophoben Monomeren und niedermolecularen Styrol/Maleinanhydride-Polymeren
Paper sizing with latex dispersions of copolymers of hydrophobic monomers and low molecular weight styrene-maleic anhydride polymers

(30) Priorité: 31.05.1996 FR 9606737
(43) Date de publication de la demande: 03.12.1997
(73) Titulaire: Atofina, 92800 Puteaux (FR)
(72) Inventeur: Feret, Bruno, 78960 VOISINS LE BRETONNEUX (FR); Betremieux, Isabelle, 60580 COYE LA FORET (FR)
(74) Mandataire: Chaillot, Geneviève

(56) Documents cités:
- WO-A-91/08235
- WO-A-93/07191
- WO-A-94/10235
- WO-A-95/29963
- US-A- 5 002 982

## Description

La présente a trait au traitement de surface des papiers impression-écriture ou emballage".

Il est connu d'utiliser pour le collage de surface du papier des agents d'imprégnation constitués par des dispersions-latex réalisées par polymérisation ou copolymérisation de monomères hydrophobes au sein d'une solution aqueuse de polymères anioniques hydrosolubles ou hydrodispersibles, en particulier de copolymères styrène - anhydride maléique, comme l'enseigne le brevet allemand DE 25 48393. Ces produits ont donné satisfaction, au moins tant que les papiers ont été fabriqués à partir des pâtes vierges. Avec les pâtes mécaniques ou recyclées à 100% ou simplement partiellement recyclées, il devient très difficile, voir impossible d'obtenir des papiers à résistance humide satisfaisante. Ce phénomène, déjà perceptible pour les papiers "impression-écriture" devient majeur pour les papiers d'emballage.

On vient de trouver que des compositions de collage à base de latex basés sur des copolymères styrène - anhydride maléique de faible poids moléculaire apportaient une solution inattendue à ce problème.

WO 91/08235 décrit un procédé de fabrication de dispersions polymères stables par polymérisation radicalaire en émulsion de monomères à insaturation vinylique dans un milieu aqueux en présence d'un catalyseur et de polymères amphotères comme stabilisants, ces derniers étant pratiquement insolubles dans l'eau au point isoélectrique.

WO 93/07191 concerne des polymères en émulsion diluables dans l'eau à plusieurs stades. Pour le premier stade, on utilise des monomères à insaturation éthylénique à groupes carboxyle, des amides d'acides carboxyliques à insaturation oléfinique, et des monomères à insaturation oléfinique sans autres groupes fonctionnels. Pour le second stade, on utilise des monomères à insaturation oléfinique sans autres groupes fonctionnels. Les polymères sont utilisés de préférence comme résines de broyage pour résine de pigmentation, comme résines dispersantes et comme liants dans des peintures aqueuses pour des surfaces métalliques et des substrats en bois et minéraux.

WO 95/29963 décrit un procédé de fabrication d'une composition de polymère réticulable aqueuse exempte de solvant organique, ce procédé comprenant les étapes consistant à préparer une solution aqueuse d'un oligomère à fonctionnalité acide ayant des groupes réticulants, à conduire une polymérisation en émulsion aqueuse pour former une émulsion aqueuse d'un polymère hydrophobe oléfinique en présence de la solution aqueuse d'oligomère, et à combiner avec un agent réticulant.

US-A-5 002 982 décrit un mat de papier fabriqué à partir d'une bouillie ou dispersion aqueuse de pâte kraft, des ingrédients de compoundage, un liant, un latex anionique d'un copolymère dont le coeur comprend un copolymère d'un monomère vinyl aromatique et d'un acide dicarboxylique, et l'écorce comprend un copolymère d'un monomère vinyl aromatique, d'un diène conjugué, d'un monomère glycidylique et facultativement un monomère acide monocarboxylique.

WO 94/10 235 décrit une composition de latex qui comprend de l'eau ; un copolymère styrène-anhydride maléique solubilisé ; un copolymère greffé se composant d'un ou plusieurs monomères à insaturation éthylénique polymérisables choisis dans le groupe constitué par un acrylate, un méthacrylate, un monomère alcényl aromatique, un monomère alcényl aliphatique et leurs combinaisons greffées sur une partie dudit copolymère styrène-anhydride maléfique ; un polymère d'un ou plusieurs monomères à insaturation éthylénique choisis dans le groupe constitué par un acrylate, un méthacrylate, un monomère alcényl aromatique, un monomère alcényl aliphatique et leurs combinaisons ; un agent tensio-actif non ionique, un agent tensio-actif anionique ou une combinaison de ceux-ci ; un carbonate de zinc ou de zirconyl ammonium; et dans lequel ledit latex a un pH d'environ 9,0 à environ 11,0.]

L'invention est ainsi l'application de dispersions-latex, résultant de la polymérisation d'un mélange de monomères hydrophobes composé de styrène et d'esters (méth)acryliques en émulsion dans une solution aqueuse d'un copolymère amphiphile hydrosoluble ou hydrodispersible constitué d'une combinaison de monomères hydrophobes et de monomères hydrophiles porteurs de fonctions acide carboxylique, en présence d'un amorceur radicalaire, dont ledit copolymère amphiphile est de masse moléculaire comprise entre 500 et 5.000, au collage des papiers impression-écriture et papiers d'emballage, et plus particulièrement à de tels papiers obtenus à partir de pâtes recyclées. Dans la dispersion-latex, le copolymère de masse moléculaire comprise entre 500 et 5.000 est préférentiellement un copolymère d'un ou plusieurs monomères hydrophobes pris dans le groupe constitué par le styrène ou ses dérivés, l'isobutylène ou ses dérivés, les esters (méth)acryliques et d'un ou plusieurs monomères hydrophiles pris dans le groupe constitué de l'acide(méth)acrylique et l'anhydride maléique, ce dernier pouvant être partiellement modifié par un alcool ou une amine tout en restant hydrosoluble ou hydrodispersible en milieu aqueux, en particulier un copolymère de styrène et d'anhydride maléique dont la partie anhydride peut être modifiée ou non par un alcool ou une amine et dont l'indice d'acide est compris entre 150 et 500. Les monomères hydrophobes polymérisés en émulsion dans la solution aqueuse du copolymère amphiphile sont des monomères du groupe constitué par le styrène et ses dérivés, les esters (méth)acryliques, y compris les esters(méth)acryliques fluorés résultant de l'estérification de l'acide (méth)acrylique par un alcool perfluoré, ou un mélange de ces monomères.

L'application des dispersions-latex selon l'invention est également appréciée dans le traitement des cartonnages pour emballage exécutés à partir de pâtes recyclées, pour lesquels une certaine résistance à l'eau reste recherchée.

### EXEMPLES

### Exemple 1 : Préparation d'un latex selon l'invention.

Dans un réacteur tricol en verre d'une capacité de 20 litres, muni d'une agitation mécanique, on introduit dans l'ordre 1.269 g d'un oligomère de masse moléculaire égale à 1.900, constitué de 74,3 % massique de styrène et 25,7 % massique d'anhydride maléique, 6.825 g d'eau déminéralisée et 500 g d'ammoniaque à 28 % dans l'eau. L'ensemble des réactifs est chauffé à 60°C et maintenu sous agitation jusqu'à la dissolution de l'oligomère. On porte la solution à 85°C, puis on ajoute sous azote et agitation, un mélange de 1.374 g de styrène et de 1.587 g d'acrylate de butyle ainsi qu'une solution de 52,9 g de (NH₄)₂S₂O₈ dans 1.057 g d'eau, en procédant en continu pendant deux heures à l'aide de pompes doseuses dans la solution de l'oligomère préparée précédemment, à 85°C. Le milieu réactionnel est maintenu encore 2 heures à 85°C, puis refroidi sous faible agitation.

On obtient un latex dont les caractéristiques sont les suivantes :
Extrait sec = 23,5 %
Viscosité Brookfield à 23°C = 20 mPa.s
pH = 8,85
Diamètre moyen des particules = 55 nm

### Exemple 2

Cet exemple montre l'avantage des agents de collage selon l'invention pour le traitement de surface de papiers impression-écriture quant à leur résistance à l'eau.

La qualité du collage final est appréciée par le test COBB bien connu de l'homme du métier, qui procède selon la norme NF EN 20535 - ISO 535. On pratique ici le test COBB avec un temps de contact de 60 secondes.

Le traitement est réalisé à l'aide d'une presse encolleuse de laboratoire sur deux types de papiers. L'un de 70 g/m² de grammage, sans collage interne et l'autre de 90 g/m², ayant subi ou non un collage interne avec de l'alkylcétène dimère (Aquapel®315 de Hercules, ci-après AKD). Les deux papiers sont fabriqués à partir d'une pâte chimique vierge.

L'essai rapporte les résultats du collage obtenu avec des compositions aqueuses comportant :
5%, en poids, d'amidon anionique AMYLIS® 100 P (ROQUETTE),
2,5%, 5% ou 10%, en poids de matière active, de dispersion-latex,
la composition étant amenée à 100% par ajout du complément nécessaire à cet effet d'eau permutée.

La dispersion-latex selon l'invention est celle qui a été décrite dans l'exemple 1. Le produit de comparaison selon l'art antérieur est la dispersion de l'exemple 7 du brevet DE 2548393.

On a obtenu sur un papier non collé en interne :

| Produits | COBB 60 à 2,5% | COBB 60 à 5% | COBB 60 à 10% |
|---|---|---|---|
| Selon l'invention | > 100 | 90 | 35 |
| Selon l'art antérieur | > 100 | > 100 | 55 |

On a obtenu sur un papier collé en interne avec de l'AKD

| Produits | COBB 60 à 2,5% | COBB 60 à 5% | COBB 60 à 10% |
|---|---|---|---|
| Selon l'invention | 36 | 35 | 28 |
| Selon l'art antérieur | 49 | 40 | 33 |

On estime qu'un papier d'impression-écriture acceptable doit avoir un COBB 60 inférieur à 30-40. Sur cette base, il est aisé de constater l'avantage incontestable des dispersions-latex de l'invention sur celles de l'art antérieur.

### Exemple 3

Dans cet exemple, le papier est fabriqué sans aucun agent de collage interne, soit à partir d'une pâte mécanique désencrée, soit avec une pâte recyclée. Le traitement a été réalisé sur une machine à papier pilote à trois taux d'introduction équivalents à une dépose en agents de collage de surface - ceux de l'exemple précédent - de 9, 12 et 15 Kg / tonne de papier pour le premier support, de 3, 6 et 12 Kg /T pour le second.

On a obtenu sur pâte mécanique désencrée

| Produits | COBB 60 à 9 Kg/T | COBB 60 à 12 Kg/T | COBB 60 à 15 Kg/T |
|---|---|---|---|
| Selon l'invention | 81 | 46 | 28 |
| Selon l'art antérieur | 123 | 98 | 78 |

On a obtenu sur pâte 100% recyclée

| Produits | COBB 60 à 3 Kg/T | COBB 60 à 6 Kg/T | COBB 60 à 12 Kg/T |
|---|---|---|---|
| Selon l'invention | 140 | 120 | 25 |
| Selon l'art antérieur | 145 | 120 | 100 |

Ces résultats montrent que l'agent de collage de l'invention donne un collage suffisant pour des taux de dépose de 12 à 15 kg/t tandis que le produit de comparaison ne permet même pas d'approcher un niveau de collage satisfaisant à ce taux d'usage.

## Revendications

1. Application de dispersions-latex, résultant de la polymérisation d'un mélange de monomères hydrophobes composé de styrène et d'esters (méth)acryliques en émulsion dans une solution aqueuse d'un copolymère amphiphile hydrosoluble ou hydrodispersible constitué d'une combinaison de monomères hydrophobes et de monomères hydrophiles porteurs de fonctions acide carboxylique, en présence d'un amorceur radicalaire, dont ledit copolymère amphiphile est de masse moléculaire comprise entre 500 et 5.000, au collage des papiers.

2. Application de dispersions-latex selon la revendication 1, **caractérisée en ce que** dans les dispersions-latex, le copolymère de masse moléculaire comprise entre 500 et 5.000 est un copolymère d'un ou plusieurs monomères hydrophobes pris dans le groupe constitué par le styrène ou ses dérivés, l'isobutylène ou ses dérivés, les esters (méth)acryliques et d'un ou plusieurs monomères hydrophiles pris dans le groupe constitué de l'acide(méth)acrylique et l'anhydride maléique, ce dernier pouvant être partiellement modifié par un alcool ou une amine tout en restant hydrosoluble ou hydrodispersible en milieu aqueux.

3. Application de dispersions-latex selon la revendication 1, **caractérisée en ce que** dans les dispersions-latex le copolymère de masse moléculaire comprise entre 500 et 5.000 est un copolymère de styrène et d'anhydride maléique dont la partie anhydride peut être modifiée ou non par un alcool ou une amine et dont l'indice d'acide est compris entre 150 et 500.

4. Application de dispersions-latex selon la revendication 1, **caractérisé en ce que** dans les dispersions-latex les monomères hydrophobes sont pris dans le groupe constitué par le styrène et ses dérivés, les esters (méth)acryliques, y compris les esters(méth)acryliques fluorés résultant de l'estérification de l'acide (méth)acrylique par un alcool perfluoré, ou un mélange de ces monomères.

5. Application selon l'une ou l'autre des revendications 1 à 4 dans laquelle le papier est un papier d'impression-écriture.

6. Application selon l'une ou l'autre des revendications 1 à 4 dans laquelle le papier est un papier d'emballage.

7. Application selon l'une ou l'autre des revendications 1 à 4 dans laquelle le papier est un papier d'emballage réalisé à partir d'une pâte mécanique désencrée ou d'une pâte recyclée.

## Patentansprüche

1. Verwendung von Latexdispersionen, die durch Emulsionspolymerisation eines Gemischs hydrophober Monomere aus Styrol und (Meth)acrylsäureestern in einer wäßrigen Lösung eines wasserlöslichen oder wasserdispergierbaren amphiphilen Copolymers, das aus einer Kombination von hydrophoben Monomeren und hydrophilen Monomeren mit Carbonsäurefunktionen aufgebaut ist und eine Molekularmasse zwischen 500 und 5000 aufweist, in Gegenwart eines radikalischen Initiators erhältlich sind, zum Leimen von Papier.

2. Verwendung von Latexdispersionen nach Anspruch 1, **dadurch gekennzeichnet, daß** es sich in den Latexdispersionen bei dem Copolymer mit einer Molekularmasse zwischen 500 und 5000 um ein Copolymer aus einem oder mehreren hydrophoben Monomeren aus der Gruppe bestehend aus Styrol oder dessen Derivaten, Isobutylen oder dessen Derivaten und (Meth)acrylsäureestern und einem oder mehreren hydrophilen Monomeren aus der Gruppe bestehend aus (Meth)acrylsäure und Maleinsäureanhydrid, wobei letzteres partiell durch einen Alkohol oder ein Amin modifiziert sein kann, dabei aber in wäßrigem Medium wasserlöslich oder wasserdispergierbar bleibt, handelt.

3. Verwendung von Latexdispersionen nach Anspruch 1, **dadurch gekennzeichnet, daß** es sich in den Latexdispersionen bei dem Copolymer mit einer Molekularmasse zwischen 500 und 5000 um ein Copolymer aus Styrol und Maleinsäureanhydrid, worin der Anhydridteil gegebenenfalls durch einen Alkohol oder ein Amin modifiziert sein kann und die Säurezahl zwischen 150 und 500 liegt.

4. Verwendung von Latexdispersionen nach Anspruch 1, **dadurch gekennzeichnet, daß** in den Latexdispersionen die hydrophoben Monomere aus der Gruppe bestehend aus Styrol und dessen Derivaten, (Meth)acrylsäureestern einschließlich fluorierten (Meth)acrylsäureestern, die durch Veresterung von (Meth)acrylsäure mit einem perfluorierten Alkohol erhältlich sind, oder einem Gemisch dieser Monomere stammen.

5. Verwendung nach einem der Ansprüche 1 bis 4, bei der es sich bei dem Papier um Druck- und Schreibpapier handelt.

6. Verwendung nach einem der Ansprüche 1 bis 4, bei der es sich bei dem Papier um Packpapier handelt.

7. Verwendung nach einem der Ansprüche 1 bis 4, bei der es sich bei dem Papier um aus deinktem Holzstoff oder recycliertem Halbstoff hergestelltes Packpapier handelt.

## Claims

1. Application of latex-dispersions, resulting from the polymerization of a mixture of hydrophobic monomers composed of styrene and of (meth)acrylic esters in emulsion in an aqueous solution of a water-soluble or water-dispersible amphiphilic copolymer consisting of a combination of hydrophobic monomers and hydrophilic monomers bearing carboxylic acid functions, in the presence of a radical initiator, in which the said amphiphilic copolymer has a molecular mass of between 500 and 5,000, to the bonding of papers.

2. Application of latex-dispersions according to Claim 1, **characterized in that**, in the latex-dispersions, the copolymer with a molecular mass of between 500 and 5,000 is a copolymer of one or more hydrophobic monomers taken from the group consisting of styrene or derivatives thereof, isobutylene or derivatives thereof and (meth)acrylic esters and of one or more hydrophilic monomers taken from the group consisting of (meth)acrylic acid and maleic anhydride, it being possible for the latter to be partially modified with an alcohol or an amine while at the same time remaining water-soluble or water-dispersible in aqueous medium.

3. Application of latex-dispersions according to Claim 1, **characterized in that**, in the latex-dispersions, the copolymer with a molecular mass of between 500 and 5,000 is a copolymer of styrene and of maleic anhydride in which the anhydride part may or may not be modified with an alcohol or an amine and in which the acid number is between 150 and 500.

4. Application of latex-dispersions according to Claim 1, **characterized in that**, in the latex-dispersions, the hydrophobic monomers are taken from the group consisting of styrene and derivatives thereof, (meth)acrylic esters, including fluoro(meth)-acrylic esters resulting from the esterification of (meth)acrylic acid with a perfluoro alcohol, or a mixture of these monomers.

5. Application according to any one of Claims 1 to 4, in which the paper is a printing and writing paper.

6. Application according to any one of Claims 1 to 4, in which the paper is a wrapping paper.

7. Application according to any one of Claims 1 to 4, in which the paper is a wrapping paper made from a de-inked mechanical pulp or from a recycled pulp.
